# EUROPÄISCHE PATENTSCHRIFT

(11) **EP 1 588 518 B1**
(45) Veröffentlichungstag und Bekanntmachung des Hinweises auf die Patenterteilung: **04.04.2007**
(21) Anmeldenummer: 04706184.1
(22) Anmeldetag: 29.01.2004
(51) Int. Cl.: H04L 9/06

(54) **VORRICHTUNG UND VERFAHREN ZUM BERECHNEN VON VERSCHLÜSSELTEN DATEN AUS UNVERSCHLÜSSELTEN DATEN ODER VON UNVERSCHLÜSSELTEN DATEN AUS VERSCHLÜSSELTEN DATEN**
DEVICE AND METHOD FOR THE CALCULATION OF ENCRYPTED DATA FROM UNENCRYPTED DATA OR UNENCRYPTED DATA FROM ENCRYPTED DATA
DISPOSITIF ET PROCEDE DE CALCUL DE DONNEES CRYPTEES A PARTIR DE DONNEES NON CRYPTEES OU DE DONNEES NON CRYPTEES A PARTIR DE DONNEES CRYPTEES

(30) Priorität: 30.01.2003 DE 10303723
(43) Veröffentlichungstag der Anmeldung: 26.10.2005
(73) Patentinhaber: Infineon Technologies AG, 81669 München (DE)
(72) Erfinder: AIGNER, Manfred, A-8010 Graz (AT); BOCK, Holger, A-8020 Graz (AT)
(74) Vertreter: Zinkler, Franz
(86) Internationale Anmeldenummer: PCT/EP2004/000813
(87) Internationale Veröffentlichungsnummer: WO 2004/068783

(56) Entgegenhaltungen:
- MOORE S ET AL: "Improving smart card security using self-timed circuits" PROCEEDINGS OF THE EIGHTH INTERNATIONAL SYMPOSIUM ON ASYNCHRONOUS CIRCUITS AND SYSTEMS, MANCHESTER, UK, 8-11 APRIL 2002, Seiten 211-218, XP002282397 2002, Los Alamitos, CA, USA, IEEE Comput. Soc, USA ISBN: 0-7695-1540-1
- DHEM J-F ET AL: "Hardware and software symbiosis helps smart card evolution" IEEE MICRO, IEEE INC. NEW YORK, US, Bd. 21, Nr. 6, November 2001 (2001-11), Seiten 14-25, XP002275593 ISSN: 0272-1732

## Beschreibung

Die vorliegende Erfindung bezieht sich auf Kryptographiekonzepte und insbesondere auf die Absicherung von Kryptographiekonzepten gegenüber Attacken gegen dieselben.

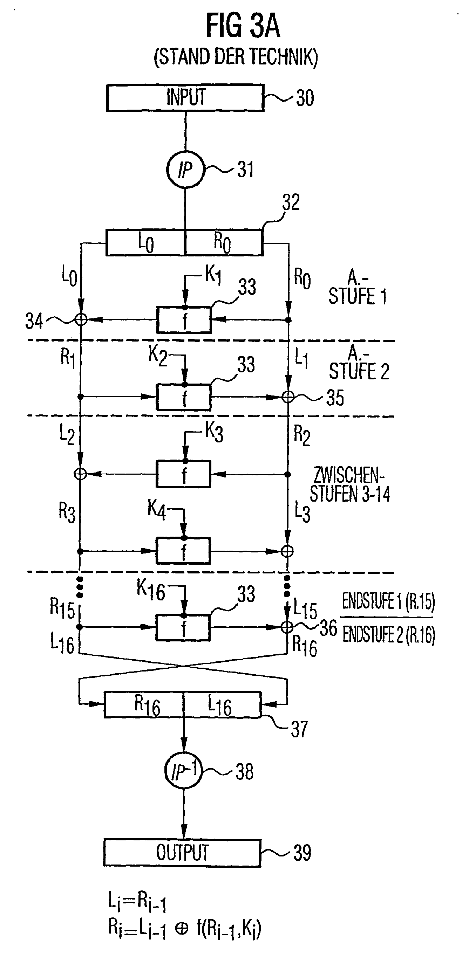

Fig. 3a zeigt als Beispiel eine Darstellung des bekannten DES-Algorithmus, der beispielsweise im Kapitel 7.4.2 des Fachbuchs "Handbook of Applied Cryptography, Menezes u. a., CRC Press, 1996, beschrieben ist. Der DES ist ein Feistel-Verschlüsselungsalgorithmus, der Klartextblöcke mit n = 64 Bits verarbeitet, um Blöcke von verschlüsselten Daten mit einer Größe von 64 Bits zu erzeugen und umgekehrt. Die effektive Größe des geheimen Schlüssels K beträgt k = 56 Bits. Insbesondere ist der Eingabeschlüssel als 64-Bit-Schlüssel spezifiziert, wobei 8 Bits als Paritätsbits verwendet werden können. Die 2⁵⁶ Schlüssel implementieren 2⁵⁶ der 2⁶⁴ möglichen Bijektionen in 64-Bit-Blöcken.

Bezug nehmend auf Fig. 3a werden die Eingangsdaten bei einem Block 30 eingegeben und zunächst einer Anfangspermutation (IP; IP = Initial Permutation) 31 unterzogen. Dann werden die Bits dieser sogenannten nullten Runde in einen linken Block L₀ und einen rechten Block R₀ aufgeteilt, wie es bei 32 in Fig. 3a dargestellt ist. Diese Daten werden dann in einer ersten Runde des DES-Algorithmus verarbeitet, und zwar unter Verwendung einer Rundenfunktion 33, die aus einem ersten Rundenschlüssel K₁ und dem rechten Datenblock R₀ Ausgangsdaten erzeugt, die mit den linken Daten unter Verwendung einer XOR-Verknüpfung 34 verknüpft werden, um neue rechte Daten R₁ zu erzeugen.

Die neuen linken Daten L₁ entsprechen den alten rechten Daten R₀. In Fig. 3a ist die erste Runde, also die Verarbeitung unter Verwendung des ersten Rundenschlüssels K₁ als Anfangsstufe 1 bezeichnet. In einer auf die Anfangsstufe 1 folgenden Anfangsstufe 2 wird das selbe Prozedere, wie es in dem Blockschaltbild von Fig. 3a dargestellt ist, durchgeführt, nun jedoch mit dem Ergebnis der XOR-Verknüpfung 34 als Eingang in die kryptongraphische Funktion 33. In dieser zweiten Runde oder Anfangsstufe 2 wird jedoch ein zweiter Rundenschlüssel K₂ verwendet, um dann die Ausgangsdaten der Funktion 33 der Anfangsstufe 2 wieder mittels einer XOR-Verknüpfung 35 mit den alten rechten Daten R₀ (die die neuen linken Daten L₁ sind) zu verknüpfen. Dieses Prozedere wird für die Zwischenstufen oder Runden 3 bis 14 nacheinander durchgeführt. Der DES-Algorithmus hat insgesamt 16 Runden. In der 15. Runde, die in Fig. 3a mit Endstufe 1 bezeichnet ist, wird ein 15-ter Rundenschlüssel K₁₅ (in Fig. 3a nicht gezeigt). In einer letzten Endstufe des DES-Algorithmus, die die 16. Runde ist und in Fig. 3a auch mit Endstufe 2 bezeichnet ist, wird dann unter Verwendung des 16-ten Rundenschlüssels K₁₆ und der entsprechenden Eingangsdaten R₁₅ ein letztes Mal die kryptographische Funktion 33 durchgeführt, um die Ausgangsdaten der kryptographischen Funktion 33 der 16-ten Runde mit dem linken Datenblock L₁₅ der vorausgehenden Runde einer XOR-Verknüpfung 36 zu unterziehen, um dann, wie es in Fig. 3a gezeigt ist, die linken und rechten Daten erneut umzuordnen (Block 37).

Die in der im Block 37 von Fig. 3a angedeuteten Art und Weise geordneten Daten werden dann einer Endpermutation unterzogen, die invers zur Anfangspermutation 31 ist und in Fig. 3a mit 38 bezeichnet ist. Am Ausgang des Blocks 38 liegen dann die verschlüsselten Daten vor, genauer gesagt ein Block von verschlüsselten Daten, wie es bei 39 veranschaulicht ist. Zur Entschlüsselung wird das ganze Prozedere umgekehrt durchgeführt.

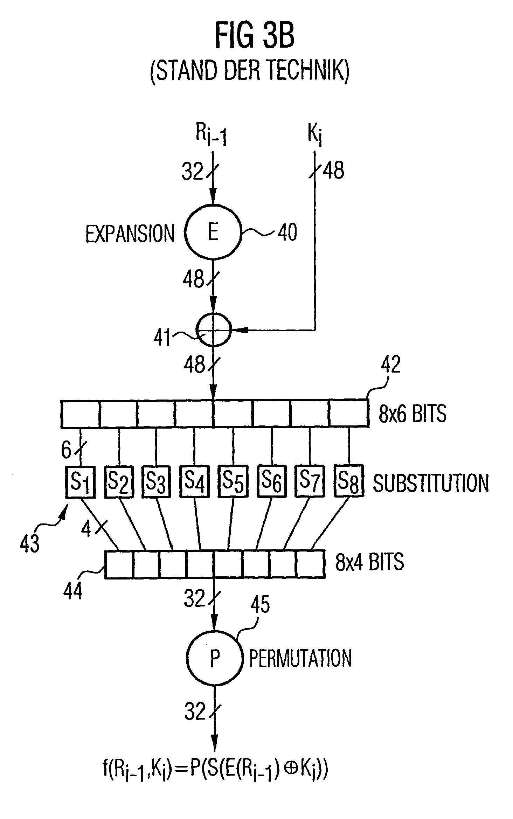

Fig. 3b zeigt die innere Funktion f (33 in Fig. 3a) des DES-Algorithmus. Die rechten Daten Rᵢ₋₁ der vorausgehenden Stufe bzw. der vorausgehenden Runde werden einer Expansion 40 unterzogen und dann mit dem Rundenschlüssel Kᵢ einer XOR-Verknüpfung 41 unterzogen, um dann in acht Gruppen von je 6 Bits angeordnet zu werden (42). Dann wird eine Substitutionsoperation mittels acht verschiedener vordefinierter Tabellen 43 durchgeführt, die in der Technik auch als SBOXEN bezeichnet werden. Jede der SBOXEN liefert an ihrem Ausgang einen 4-Bit-Wert. Die Ausgangsdaten der Substitutionsoperation 43 werden dann blockweise angeordnet (44), um einer Permutationsoperation 45 unterzogen zu werden. Die Ausgangsdaten der Permutation 45 bilden somit die Ausgangsdaten der kryptographischen Funktion 33 von Fig. 3a, die auch als Rundenfunktion bezeichnet wird.

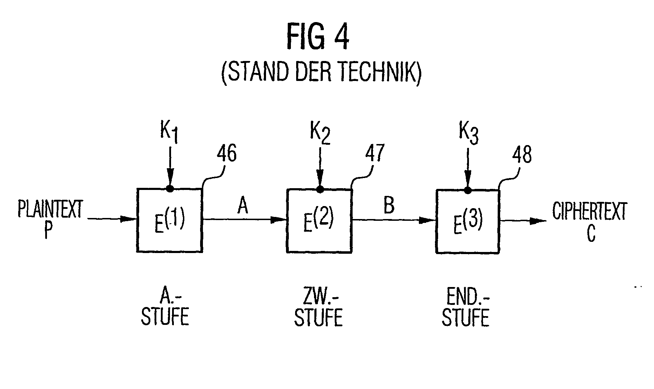

Der DES-Algorithmus ist eine sogenannte Block-Chiffre, da er aus einem Block von Eingangsdaten (30 in Fig. 3a) einen Block von Ausgangsdaten (39 in Fig. 3a) berechnet. So existieren verschiedene Block-Cipher-Typen, die im Kapitel 7 des oben zitierten Fachbuchs aufgeführt sind. Allgemein stellt sich ein Block-Verschlüsselungsalgorithmus mit mehreren Stufen dar, wie es in Fig. 4 angedeutet ist. Ein solcher Mehrfach-Verschlüsselungs-Algorithmus erhält eingangsseitig die unverschlüsselten Daten, die auch als Plaintext P bezeichnet werden. Sie werden einer Anfangsstufe eines insgesamten Verschlüsselungsalgorithmus unterzogen, die in Fig. 4 mit 46 bezeichnet ist. In der Anfangsstufe wird ein erster Schlüssel K₁ verwendet. Die Ausgangsdaten A der Anfangsstufe werden dann einer Zwischenstufe 47 zugeführt, die eine alternative oder gleiche Verschlüsselungsoperation wie die Anfangsstufe durchführt, nun jedoch mit dem Schlüssel K₂, der sich typischerweise von dem Schlüssel K₁ unterscheidet. Die Ausgangsdaten B der Zwischenstufe werden dann einer Endstufe 48 zugeführt, die eine weitere Verschlüsselungsoperation durchführt, nun jedoch mit einem anderen Schlüssel K₃ der Endstufe, der sich typischerweise von den Schlüsseln K₁ der Anfangsstufe 46 und dem Schlüssel K₂ der Zwischenstufe 47 unterscheidet. Am Ausgang der Endstufe 48 ergibt sich der verschlüsselte Datenblock oder Ciphertext C.

Der in Fig. 3a und Fig. 3b beschriebene DES-Algorithmus basiert auf zwei allgemeinen Konzepten, nämlich den Produkt-Verschlüsselungsalgorithmen und den Feistel-Verschlüsselungsalgorithmen. Jedes Prinzip umfasst das Iterieren einer gemeinsamen Sequenz oder Runde von Operationen. Die grundsätzliche Idee eines Produkt-Verschlüsselungsalgorithmus besteht darin, eine komplexe Verschlüsselungsfunktionalität aufzubauen, indem mehrere einfache Operationen zusammengesetzt werden, die gemeinsam betrachtet relativ sicherer sind, die jedoch individuell betrachtet keinen ausreichenden Schutz liefern. Diese Grundoperationen umfassen Transpositionen, Translationen (z. B. XOR) und lineare Transformationen, arithmetische Operationen, modulare Multiplikationen und einfache Substitutionen. Ein Produkt-Verschlüsselungsalgorithmus kombiniert somit zwei oder mehr Transformationen unterschiedlicher Ausprägung auf eine Art und Weise, dass die resultierende Verschlüsselung sicherer als die einzelnen Komponenten ist.

Ein Feistel-Verschlüsselungsalgorithmus ist eine iterierte Verschlüsselungs-Abbildung eines 2 t-Bit-Klartext (beispielsweise t-Bit-Blöcke L₀ und R₀ in einen Verschlüsselungstext (Rᵣ, Lᵣ), und zwar durch einen Prozeß mit r Runden, wobei r größer oder gleich 1 ist. Es wird typischerweise eine Rundenzahl von r ≥ 3 bevorzugt, wobei r oft eine gerade Zahl ist. Ein typisches Merkmal der Feistel-Struktur besteht darin, dass die Blöcke der linken Daten und der rechten Daten von Runde zu Runde ausgetauscht werden.

Die Entschlüsselung wird dadurch erreicht, dass derselbe r-Runden-Prozeß durchgeführt wird, jedoch mit Unterschlüsseln, die in der umgekehrten Reihenfolge verwendet werden, also Kᵣ bis K₁. Die Verschlüsselungsfunktion des Feistel-Verschlüsselungsalgorithmus kann ein Produkt-Verschlüsselungsalgorithmus sein, wobei f selbst nicht invertierbar sein muss, um eine Inversion des Feistel-Verschlüsselungsalgorithmus zu erlauben.

Aus der vorstehenden Diskussion bekannter Verschlüsselungsalgorithmen wird deutlich, dass moderne Verschlüsselungsalgorithmen typischerweise aus einer Folge von identischen Rundenfunktionen (Fig. 3a) oder allgemein aus einer Kaskadierung von gleichen oder unterschiedlichen Verschlüsselungskonzepten bestehen, wobei jeder der betrachteten Algorithmen eine Anfangsstufe, zumindest eine Zwischenstufe und eine Endstufe aufweist, wobei in der Verarbeitung jeder der genannten Stufen, also der Anfangsstufe, der Zwischenstufe oder der Endstufe typischerweise ein Geheimnis oder ein Teil dieses Geheimnisses verarbeitet wird, nämlich ein Schlüssel K₁, ..., Kₙ, der - für einen symmetrischen Algorithmus - der die Verschlüsselungsoperation durchführenden Entität einerseits und der die Entschlüsselungsoperation durchführenden Entität andererseits bekannt sein muss.

Ein Wesen von kryptographischen Algorithmen besteht darin, dass Informationen verschlüsselt werden die auf irgendeine Weise sensibel sind, also Dritten nicht zugänglich gemacht werden sollen. Dies bringt unmittelbar mit sich, dass gegen kryptographische Algorithmen Attacken entwickelt und durchgeführt werden, um dennoch ohne Kenntnis des Schlüssels an die sensiblen Informationen zu kommen. Nachdem die grundsätzliche Struktur der oben bezeichneten kryptographischen Algorithmen öffentlich bekannt ist, die einzige für den Angreifer unbekannte Komponente also der Schlüssel selbst und gegebenenfalls der Plaintext ist, zielen einige Attacken darauf ab, auf irgendeine Art und Weise den Schlüssel zu eruieren. Sobald ein Angreifer einen Schlüssel eruiert hat, hat er das kryptographische System "geknackt". Hier sei darauf hingewiesen, dass für den Angreifer die wertvollste Information der Schlüssel selbst ist. Dennoch sind auch Attacken denkbar, bei denen lediglich der Plaintext, nicht aber der Schlüssel selbst geknackt werden. Diese Angriffe sind jedoch suboptimal, da ohne Kenntnis des Schlüssels für jeden Angriff ein Aufwand getrieben werden muss, der nicht anfällt, wenn der Schlüssel selbst geknackt worden ist.

Angriffe gegen Kryptographiesysteme, also kryptographische Attacken, sind vielfältiger Natur. Die hier beschriebene DPA-Attacke wird auch als Implementierungsattacke als Spezielle Form einer kryptographischen Attacke bezeichnet, da sich der Angriff nicht auf das kryptographische System direkt richtet, sondern auf eine Implementierung des Systems.

Ein besonders gefährlicher und prinzipiell einfach durchzuführender kryptographischer Angriff wurde von P. Kocher, J. Jaffer und B. Jun vorgestellt. Dieser kryptographische Angriff wird in der Technik als DPA-Attacke bezeichnet. DPA bedeutet Differential Power Analysis. Insbesondere wird die Differenz von zwei Mittelwerten von Leistungsmessungen analysiert, um den geheimen Schlüssel einer kryptographischen Berechnung zu ermitteln, die von einer elektronischen Vorrichtung durchgeführt wird. Eine DPA-Attacke besteht grundsätzlich aus zwei Teilen, nämlich vielen genauen Messungen des Leistungsverbrauchs einer elektronischen Vorrichtung während der Ausführung eines bekannten kryptographischen Algorithmus, wobei immer der gleiche Schlüssel (der nicht von vornherein bekannt ist, sondern das Ziel der Attacke ist) verwendet wird und die zu verschlüsselnden Daten variiert werden. Der zweite Teil der DPA-Attacke besteht in einer statistischen Berechnung unter Verwendung der Leistungsmeßdaten, um die Korrektheit einer Annahme, d. h. der Schlüsselhypothese, für einen bestimmten Teil des Schlüssels, wie z. B. 6 Bits, zu verifizieren.

Ein besonderer "Vorteil" der DPA-Attacke besteht darin, dass die Schaltung selbst nicht in irgend einer Weise manipuliert werden muss. Es muss lediglich der Leistungsverbrauch der Schaltung irgendwo außerhalb der elektronischen Vorrichtung an einer gut zugänglichen Stelle gemessen werden. Außerdem muss kein sogenanntes Reverse-Engineering durchgeführt werden. Es spielt keine Rolle, wo auf dem Chip die Berechnungen durchgeführt werden, wenn insbesondere daran gedacht wird, dass auf einem Chip typischerweise nicht nur der Kryptoprozessor ist, sondern auch andere Komponenten.

Darüber hinaus spielt es keine Rolle, wann genau die kryptographischen Berechnungen auf dem Chip durchgeführt werden, da die Leistung in einem Zeitintervall gemessen werden kann. Au-ßerdem ist es nicht nötig, dass ein Angreifer, der eine DPA-Attacke durchführt, das Wesen der DPA-Attacke versteht. Wenn er weiß, wie er vorzugehen hat und die Software für die statistischen Berechnungen hat, muss der Angreifer nicht verstehen, warum die DPA-Attacke arbeitet. Daher ist die DPA-Attacke prinzipiell eine billige und einfache Attacke. Ein Angreifer benötigt lediglich eine genaue Meßausrüstung, da die DPA-Attacke prinzipiell auf dem Eruieren eines Signal/Rausch-Verhältnisses basiert. Darüber hinaus muss der Angreifer eine wiederholte Ausführung eines bekannten Algorithmus bewerkstelligen. Er muss also die Ausführung des Algorithmus mit demselben Schlüssel und variierenden Eingangsdaten provozieren können.

Nachdem die DPA-Attacke im besonderen und insbesondere auch andere verwandte kryptographische Attacken auf dem Leistungsverbrauch der Schaltung, die einen kryptographischen Algorithmus durchführt, aufbaut, bestehen Bestrebungen zum Schutz gegen DPA-Attacken darin, dass der Leistungsverbrauch der Schaltung homogenisiert wird. Im Idealfall zeigt eine solche optimal gegen DPA-Attacken geschützte Schaltung ein immer gleiches Leistungsverbrauchsverhalten, und zwar unabhängig von den zu verschlüsselnden Daten, so dass ein DPA-Angreifer zwar seine DPA-Attacke ruhig durchführen kann, jedoch für sämtliche unterschiedlichen Eingangsdaten immer dasselbe Leistungsprofil erhält. In diesem Fall, wenn er immer das gleiche Leistungsprofil gemessen hat, wird die statistische Analyse fehlschlagen bzw. keine signifikanten Ergebnisse liefern, so dass die DPA-Attacke zum Scheitern verurteilt ist.

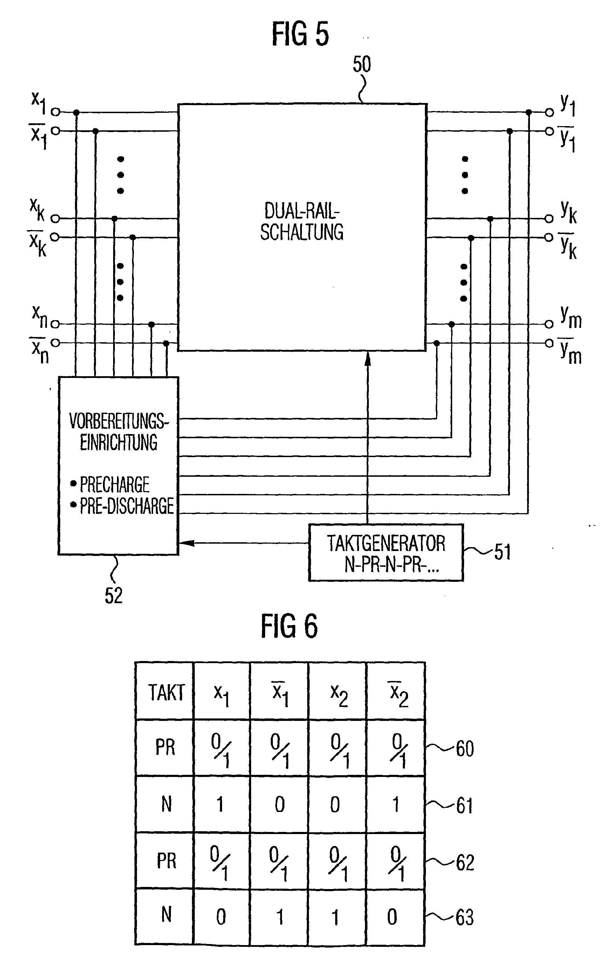

Typische Schaltungen werden in CMOS-Technik aufgebaut. In CMOS-Technik aufgebaute Schaltungen verbrauchen dann, wenn keine Zustandsänderungen auftreten, nur eine vernachlässigbare Leistung. Ein Leistungsverbrauch tritt lediglich auf, wenn eine CMOS-Schaltung von einem Zustand (beispielsweise einer logischen 1) in den komplementären Zustand (eine logische 0) wechselt und umgekehrt. Darüber hinaus haben übliche CMOS-Schaltungen die Eigenschaft, dass Wechsel von 0 nach 1 (0 entspricht beispielsweise einer Spannung von 0 V oder Vss, während "1" beispielsweise einer hohen Spannung Vdd entspricht) einen anderen Leistungsverbrauch haben als Zustandswechsel in umgekehrter Richtung. Das Leistungsprofil der Schaltung ist somit bei einem Wechsel von 1 auf 0 anders geartet als bei einem Wechsel von 0 auf 1. Um diesen Leistungsverbrauch zu homogenisieren, ist es bekannt, eine Dual-Rail-Schaltung 50 vorzusehen, wie sie in Fig. 5 dargestellt ist.

Bei einer Dual-Rail-Schaltung ist jede logische Funktion und jede Verbindungsleitung zwischen logischen Funktionen doppelt ausgeführt. Der eine Pfad (Rail) verarbeitet das tatsächliche Nutzbit, während der andere Pfad parallel dazu das Bit verarbeitet, das zu dem Nutzbit komplementär ist. Findet somit auf der ersten Rail ein Wechsel von 1 auf 0 statt, so findet gleichzeitig dazu auf der anderen Rail ein Wechsel von 0 auf 1 statt. Im Leistungsverbrauch dieser Schaltung ergibt sich im Vergleich zu einer Single-Rail-Ausführung ein doppelt so hoher Peak, der nun jedoch, für jeden Wechsel auf dem Nutz-Pfad (und damit auf dem komplementären Pfad) gleich hoch ist.

Problematisch an einer Dual-Rail-Schaltung ist jedoch immer noch, dass, wenn ein Zustand in einem Takt gleich dem Zustand in dem darauffolgenden Takt ist, wenn also kein Zustandswechsel stattfindet, auch kein Peak im Leistungsverbrauch auftritt. Ein Angreifer kann zwar nicht mehr unterscheiden, ob ein Wechsel von 0 auf 1 oder von 1 auf 0 stattgefunden hat. Er kann jedoch sehr wohl am Leistungsprofil sehen, ob ein Zustandswechsel stattgefunden hat oder nicht.

Um auch diese Lücke zu schließen, wird die Dual-Rail-Technik um die Precharge bzw. Pre-Discharge-Technik ergänzt. Zwischen jeden Nutztakt N wird ein sogenannter Vorbereitungstakt Pr geschaltet, wie es durch einen Taktgenerator 51 in Fig. 5 angedeutet ist. Im Nutztakt führt die Dual-Rail-Schaltung die übliche von einem kryptographischen Algorithmus vorgegebene Berechnung durch. Im Vorbereitungstakt werden jedoch beide komplementären Leitungen, wie z. B. x₁, NICHTx₁ auf den gleichen Zustand gelegt. Im Falle von Precharge ist dieser Zustand der hohe Spannungszustand. Im Falle von Pre-Discharge ist dieser Zustand der niedrige Spannungszustand. Abhängig davon, in welchem Setting die Dual-Rail-Schaltung 50 eingebettet ist, kann das Prechargen bzw. Pre-Dischargen durch eine in Fig. 5 schematisch dargestellte Vorbereitungseinrichtung 52 am Eingang der Dual-Rail-Schaltung (xᵢ) oder am Ausgang der Dual-Rail-Schaltung yᵢ oder sowohl am Eingang als auch am Ausgang durchgeführt werden.

Die Verwendung der Precharge-Technik hat den Vorteil, dass sich nunmehr, wie es in der Tabelle in Fig. 6 dargestellt ist, von einem Takt zum nächsten, also von einem Precharge/Pre-Discharge-Takt zu einem Nutztakt immer dieselbe Anzahl von Zuständen ändert, unabhängig davon, welche Zustände die zu verarbeitenden Nutzbits und die zu den Nutzbits komplementären Bits haben. So ändern sich beim Übergang von dem Zustand 60 von Fig. 6 zu einem Zustand 61 in einem Nutztakt von Fig. 6 im Falle von Precharge (alle Leitungen sind auf "1") zwei Zustände (NICHTx₁, x₂) oder im Falle von Pre-Discharge ebenfalls zwei Zustände. Beim Wechsel von dem Zustand 61 zu einem Zustand 62 ändern sich wieder im Falle von Precharge genau zwei Bits und im Falle von Pre-Discharge ebenfalls zwei Bits. Ebenfalls findet eine Änderung von zwei Bits statt, wenn von dem Zustand 62 in einen Zustand 63 gewechselt wird etc. Die Dual-Rail-Technik hat somit den entscheidenden Vorteil, dass ein Angreifer nicht zwischen einem Wechsel von 0 auf 1 oder 1 auf 0 unterscheiden kann (aufgrund der Dual-Rail-Technik), und dass der Angreifer ferner nicht mehr am Leistungsprofil sehen kann, ob eine Zustandsänderung auf einer Leitung stattgefunden hat oder nicht.

Obgleich die Dual-Rail-Technik mit Precharge/Pre-Discharge einen wirkungsvollen Schutz gegenüber DPA-Attacken liefert, wird sie teuer erkauft. Der Chipverbrauch der Dual-Rail-Schaltung ist doppelt so groß im Vergleich zu dem Fall, bei dem diese Schaltung in Single-Rail ausgeführt wird. Darüber hinaus ist der Energieverbrauch einer solchen Schaltung in Dual-Rail-Technik bis zu doppelt so hoch wie im Fall einer Dual-Rail-Technik ohne Precharge und sogar - aufgrund der doppelten Ausführung der Schaltung - viermal so hoch wie eine einfache unsichere Single-Rail-Schaltung. Darüber hinaus führt das Vorsehen von Precharge/Pre-Discharge-Takten zwischen den Nutztakten dazu, dass der Datendurchsatz bezogen auf eine Anzahl von Taktzyklen halb so hoch ist.

Zusammenfassend führt eine Dual-Rail-Technik mit Precharge/Pre-Discharge zwar zu einer DPA-sicheren Schaltungsimplementierung. Diese Sicherheit wird jedoch teuer erkauft, nämlich durch einen bis zu doppelten Chipflächenverbrauch und einen bis zu vierfach erhöhten Energieverbrauch im Vergleich zu einer ungesicherten Schaltung.

Die Fachveröffentlichung "Improving Smart Card Security using Self-timed Circuits", Moore S. u.a., Proceedings of the Eighth International Symposium on Asynchronous Circuits and Systems, Manchester, UK, 8.-11. April 2002, Seiten 211-218, XP 002282397 2002, Los Alamitos, CA, USA, IEEE Comput. Soc., USA ISBN: 0-7695-1540-1, offenbart invasive und nicht-invasive Attacken sowie verschiedene Verteidigungsmöglichkeiten gegenüber solchen Attacken. So werden eine Eliminierung eines datenabhängigen Leistungsverbrauchs sowie eine Verteidigung gegenüber einer Fehler-Induktion sowie eine Erfassung und Weiterleitung von Alarmen zusätzlich zur Diffusion eines Daten-abhängigen Timings vorgeschlagen, um Attacken abzuwehren, um eine gesicherte Ausführung einer kryptographischen Berechnung zu erreichen.

Die Fachveröffentlichung "Hardware and Software Symbiosis Helps Smart Card Evolution", Dhem u.a., IEEE Micro, IEEE Inc. New York, US, Bd. 21, Nr. 6, November 2001, Seiten 14-25, XP 002275593, ISSN: 0272-1732 offenbart invasive und nicht-invasive Angriffe auf Smart Cards sowie Software-Gegenmaßnahmen und Hardware-Gegenmaßnahmen. Die Software-Gegenmaßnahmen umfassen mehrere Ausführungen identischer Berechnungen und die Verwendung von Zufalls-Masken. Hardware-Gegenmaßnahmen umfassen Lichtdetektoren, Temperaturdetektoren, Spannungsdetektoren oder Detektoren zum Erfassen eines unnormalen äußeren Takts. Hardware-Gegenmaßnahmen umfassen ferner aktive Komponenten sowie das Implementieren sämtlicher oder Teile der Smart Card in Dual-Rail-Logik, um einen konstanten Leistungsverbrauch zu erreichen.

Die Aufgabe der vorliegenden Erfindung besteht darin, ein sicheres und dennoch effizientes Kryptographiekonzept zu schaffen.

Diese Aufgabe wird durch eine Vorrichtung gemäß Patentanspruch 1, ein-Verfahren gemäß Patentanspruch 17 oder ein Computer-Programm gemäß Patentanspruch 18 gelöst.

Der vorliegenden Erfindung liegt die Erkenntnis zugrunde, dass bei kryptographischen Algorithmen, die eine Anfangsstufe und eine nachfolgende Stufe bzw. eine Endstufe und eine vorausgehende Stufe haben, es ausreichend ist, um kryptographische Attacken abzuwehren, lediglich die Anfangsstufe und/oder die Endstufe gegenüber kryptographischen Attacken abzusichern. Erfindungsgemäß ist es jedoch nicht erforderlich, auch die Zwischenstufe bzw. die typischerweise mehreren Zwischenstufen vor kryptographischen Attacken abzusichern, so lange die der Anfangsstufe nachgeschaltete Stufe in ihren Berechnungen auf den von der Anfangsstufe ausgegebenen Ausgangsdaten aufbaut bzw. abhängt.

Analog hierzu ist es für eine ebenfalls denkbare Rückwärtsattacke, also ausgehend von den verschlüsselten Daten durchgeführte Attacke ausreichend, lediglich die Endstufe gegen die Attacke zu sichern, nicht jedoch die der Endstufe vorausgehende Stufe, die typischerweise eine Zwischenstufe sein wird. In anderen Worten ausgedrückt genügt es, bei solchen kaskadierten Algorithmen, bei denen eine Zwischenstufe auf Ergebnissen der vorhergehenden oder nachfolgenden Stufe aufbaut, lediglich die erste und/oder die letzte Stufe gegenüber kryptographischen Attacken abzusichern, während die Zwischenstufe bzw. die mehreren Zwischenstufen lediglich mit reduzierter Sicherheit oder überhaupt keiner Sicherheit implementiert werden, also in einer ungesicherten Betriebsart betrieben werden.

Dies ermöglicht natürlich Angriffe auf die in einer ungesicherten Betriebsart betriebenen Stufen. Diese werden jedoch nichts nützen, da keine klare Hypothese aufgestellt werden kann, da die Eingangsdaten in die nicht gesicherte Stufe bereits unter Verwendung eines geheimen Schlüssels verschlüsselt (bzw. im Falle der Entschlüsselung entschlüsselt) worden sind.

Bildlich ausgedrückt basiert die vorliegenden Erfindung somit auf der Erkenntnis, dass es ausreichend ist, einen verbotenen Gang dadurch abzusichern, dass lediglich die Eingangs- und die Ausgangstüre sicher versperrt werden, jedoch nicht in dem Gang ebenfalls vorhandene Zwischentüren, da ein Angreifer bildlich gesprochen nicht zur Zwischentür gelangen kann, wenn die Eingangs- und die Ausgangstür des Gangs optimal gesichert sind.

Wie es vorstehend ausgeführt worden ist, geht eine Sicherung gegenüber kryptographischen Attacken immer unmittelbar mit deutlich erhöhten Kosten an Chipfläche, Energieverbrauch und gegebenenfalls Verarbeitungszeit einher. Die erfindungsgemäße Berechnung von Zwischenstufen in einem ungesicherten Modus führt daher unmittelbar zu einer Einsparung an Energie, gegebenenfalls Chipfläche und gegebenenfalls Zeit. Sind jedoch die Anfangsstufe und/oder die Endstufe optimal abgesichert, also werden diese Stufen in einer gegenüber kryptographischen Attacken gesicherten Weise durchgeführt, so müssen keine Sicherheitseinbußen hingenommen werden.

Die vorliegende Erfindung liefert somit ein einerseits sicheres und andererseits effizienteres Konzept zum Berechnen von verschlüsselten Ausgangsdaten aus Klartext-Eingangsdaten oder - im Falle der Entschlüsselung - ein Konzept zum Berechnen von Klartext-Eingangsdaten aus verschlüsselten Ausgangsdaten.

Ein Vorteil der vorliegenden Erfindung besteht somit darin, dass der Aufwand im Sinne zumindest des Strom/Energiebedarfs reduziert wird, während dennoch eine erfolgreiche Abwehr von DPA-Attacken auf kryptographische Schaltungen gewährleistet ist, wenn, wie es bei einem bevorzugten Ausführungsbeispiel der Fall ist, eine Dual-Rail-Precharge-Logik als Maßnahme zum gesicherten Durchführen der Anfangsstufe und/oder der Endstufe eines kryptographischen Algorithmus eingesetzt wird.

Im Gegensatz zu einer Anwendung, bei der DPA-Attacken dadurch abgewehrt werden sollten, indem eine Dual-Rail-Precharge-Logik beispielsweise für ein DES-Modul eingesetzt worden ist, bei dem während der gesamten Berechnung des DES-Algorithmus der Precharge-Vorgang durchgeführt worden ist, was zu einem erheblichen Energie-Mehrverbrauch bezogen auf Nicht-DPAgesicherte Schaltungen gleicher Funktion führen würde, wird erfindungsgemäß der Energie-Mehrverbrauch lediglich dort in Kauf genommen, wo er auch nötig ist, nämlich zum Durchführen der Anfangsstufe und/oder der Endstufe des kryptographischen Algorithmus auf gesicherte Art und Weise.

Da die DPA darauf beruht, dass für die Überprüfung der Annahme (Hypothese) über das "Target-Bit" eine Berechnung eines Teils des DES-Algorithmus ausgeführt werden muss, wobei eine Attacke typischerweise in den Runden 2 oder 15 der 16 DES-Runden stattfindet, werden erfindungsgemäß die Runden 3 bis 14 nicht besonders geschützt, wenn die Attacke auf die Rundenschlüssel der Runden 2 bzw. 15 bereits erfolgreich abgewehrt worden ist. Erfindungsgemäß wird erkannt, dass zumindest ein Durchführen des Precharge-Vorgangs in den Runden 3 bis 14 eine Energieverschwendung darstellt, wenn sichergestellt ist, dass die Teilschlüssel aus den Runden 1 und 2 (der Anfangsstufe) bzw. 15 und 16 (der Endstufe) erfolgreich "verteidigt" werden können.

Die vorliegende Erfindung besteht somit auch in einer flexiblen Ansteuerung für einen Dual-Rail-Precharge-fähigen Core für den betrachteten kryptographischen Algorithmus, welche den Precharge-Vorgang in den Runden 3 bis 14 unterbindet, um Strom zu sparen, während gleichzeitig das Sicherheitsniveau der gesamten DES-Berechnung nicht verschlechtert wird. Bei einem bevorzugten Ausführungsbeispiel der vorliegenden Erfindung wird somit eine Ansteuerung vorgesehen, welche in Kenntnis der "gefährdeten" und der "ungefährdeten" Runden einer kryptographischen Berechnung arbeitet, um nur in den "gefährdeten" Runden den energieintensiven Precharge/Pre-Discharge-Modus zu aktivieren.

Bevorzugte Ausführungsbeispiele der vorliegenden Erfindung werden nachfolgend Bezug nehmend auf die beiliegenden Zeichnungen detailliert erläutert. Es zeigen:
- Fig. 1: ein Blockschaltbild einer erfindungsgemäßen Vorrichtung zum Berechnen von verschlüsselten Daten aus Klartextdaten oder umgekehrt;
- Fig. 2: ein bevorzugtes Ausführungsbeispiel der in Fig. 1 dargestellten Vorrichtung;
- Fig. 3a: ein Blockschaltbild des Ablaufs des DES-Algorithmus;
- Fig. 3b: ein Blockschaltbild der Rundenfunktion f des DES-Algorithmus von Fig. 3a;
- Fig. 4: ein Blockschaltbild eines allgemeinen kaskadierten Kryptoalgorithmus;
- Fig. 5: ein Prinzipschaltbild einer Dual-Rail-Schaltung mit Precharge/Pre-Discharge; und
- Fig. 6: eine Tabelle zur Veranschaulichung der Wirkungsweise von Precharge/Pre-Discharge.

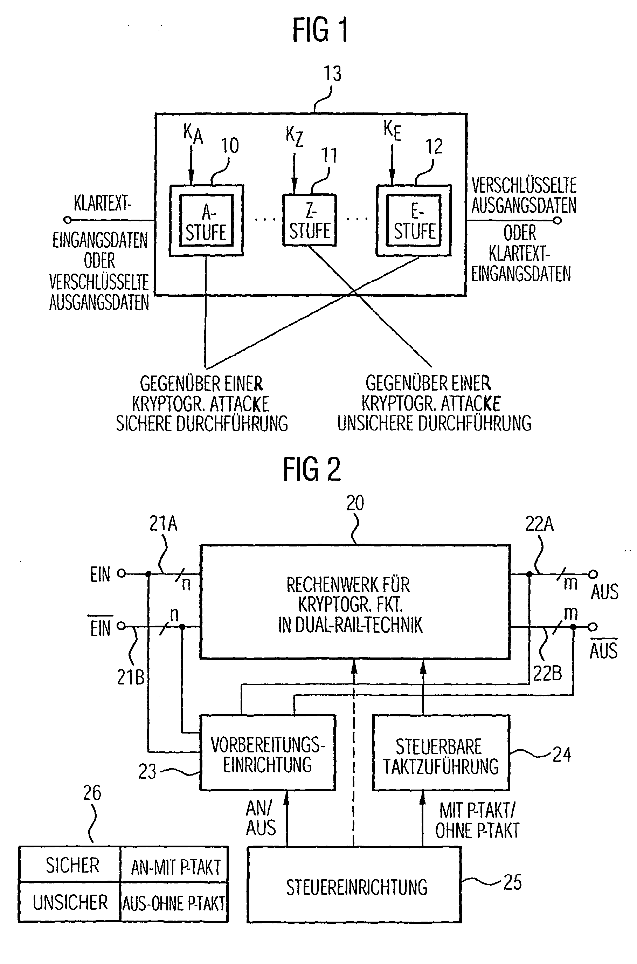

Fig. 1 zeigt ein Blockschaltbild eines bevorzugten Ausführungsbeispiels der vorliegenden Erfindung. Insbesondere zeigt Fig. 1 eine Vorrichtung zum Berechnen von verschlüsselten Daten aus Klartextdaten oder umgekehrt, d. h. zum Berechnen von Klartextdaten aus verschlüsselten Daten. Hierzu wird ein kryptographischer Algorithmus eingesetzt, der bei dem in Fig. 1 gezeigten Ausführungsbeispiel eine Anfangsstufe 10, zumindest eine Zwischenstufe 11 und eine Endstufe 12 aufweist.

Falls die in Fig. 1 gezeigte Vorrichtung zum Verschlüsseln eingesetzt wird, also zum Erzeugen von verschlüsselten Ausgangsdaten aus Klartext-Eingangsdaten, so werden in die Anfangsstufe 10 die Klartext-Eingangsdaten eingespeist, oder aber Eingangsdaten, die von den ursprünglichen Klartext-Eingangsdaten ohne Verwendung eines Schlüssels abgeleitet worden sind. Solchermaßen abgeleitete Klartext-Eingangsdaten, die in die Anfangsstufe 10 eingespeist werden können, sind beispielsweise die Ausgangsdaten der Anfangspermutation 31 von Fig. 3a, die den DES-Algorithmus darstellt.

An dieser Stelle sei darauf hingewiesen, dass die Schlüssel für die Stufen des Algorithmus voneinander abhängig sein können oder nicht. In dem Fall, in dem die Stufen Runden von z. B. dem DES-Algorithmus sind, sind die Schlüssel voneinander abhängig, da sie alle von einem gemeinsamen "Ober-Schlüssel" abgeleitet werden. Alternativ können die Schlüssel auch für voneinander unabhängige Stufen, wie z. B. im Triple-DES, voneinander unabhängig sein.

Aus der Anfangsstufe 10 werden verschlüsselte Daten ausgegeben, die unter Verwendung des der Anfangsstufe 10 bereitgestellten Schlüssels K_{A} verschlüsselt worden sind. Diese Ausgabedaten der Anfangsstufe 10 werden dann der Zwischenstufe 11 zugeführt, damit dieselbe eine erneute Verschlüsselung der bereits verschlüsselten Ausgangsdaten der Anfangsstufe 10 durchführt, wobei die Zwischenstufe 11 hierbei, wie es in Fig. 1 gezeigt ist, einen Schlüssel K_{I} verwendet. Verschlüsselte Ausgangsdaten der Zwischenstufe 11, die nunmehr bereits unter Verwendung von zwei Schlüsseln K_{A} und K_{I} verschlüsselt sind, welche vorzugsweise unterschiedlich sind, werden dann in die Endstufe 12 (nach einer Bearbeitung in möglicherweise noch zwischen der Zwischenstufe 11 und der Endstufe 12 angeordneten Zwischenstufen), um dort unter Verwendung des Schlüssels K_{E} erneut verschlüsselt zu werden, um schließlich die verschlüsselten Ausgangsdaten oder Ausgangsdaten zu erhalten, aus denen die verschlüsselten Ausgangsdaten abgeleitet werden. Diese Ableitungsvorschrift kann wieder ohne Verwendung eines kryptographischen Schlüssels stattfinden und entspricht beispielsweise der inversen Permutation 38 von Fig. 3a am Beispiel des DES-Algorithmus.

Die Prozessoreinrichtung zum Durchführen der Anfangsstufe 10, der zumindest einen Zwischenstufe 11 oder der Endstufe 12 des kryptographischen Algorithmus ist ausgebildet, um die Anfangsstufe 10 und/oder die Endstufe 12 auf eine gegenüber einer kryptographischen Attacke gesicherte Weise auszuführen, was durch die doppelte Umrandung in Fig. 1 dargestellt ist. Die Prozessoreinrichtung 13 ist ferner ausgebildet, um die Durchführung der Zwischenstufe 11 auf eine gegenüber einer kryptographischen Attacke ungesicherte Weise zu bewerkstelligen.

In diesem Zusammenhang sei darauf hingewiesen, dass die Durchführung der Zwischenstufe 11 nicht vollständig ungesichert gegenüber einer kryptographischen Attacke sein muss, sondern lediglich - im Vergleich zur Durchführung der Anfangsstufe 10 und der Endstufe 12 ungesicherter, also unter Verwendung weniger oder keiner Gegenmaßnahmen gegen eine kryptographische Attacke. Wird eine hohe Sicherheit angestrebt, so führt dies unmittelbar zu einem hohen Aufwand an Chipfläche, Energie und gegebenenfalls Zeit. Wird dagegen für eine Berechnung weniger Sicherheit benötigt, so führt dies unmittelbar zu einem geringeren Aufwand an Energie, gegebenenfalls Chipfläche und gegebenenfalls Zeit.

Die in Fig. 1 gezeigte erfindungsgemäße Vorrichtung bringt es somit mit sich, dass sie im Vergleich zu dem Fall, in dem die Anfangsstufe 10, die Zwischenstufe 11 und die Endstufe 12 alle auf eine gegenüber einer kryptographischen Attacke gesicherte Art und Weise ausgeführt werden, eine Aufwandsreduktion hat, da ein zusätzlicher Aufwand für die Sicherheit zumindest bei der Berechnung der Zwischenstufe nicht oder nur kaum anfällt.

Erfindungsgemäß wird daher davon ausgegangen, dass ein Angreifer ruhig, so er dies wünscht, einen Angriff auf die Zwischenstufe ausführen kann, sofern ihm dies überhaupt möglich ist, wenn daran gedacht wird, dass die Ausgangsdaten und die Eingangsdaten irgendwo auf dem Chip vorhanden sind und daher schwer zugänglich sind. Gelingt es einem Angreifer jedoch, einen Angriff auf die Zwischenstufe durchzuführen, so hilft ihm dies dennoch nicht weiter, da er keine vernünftige Hypothese aufstellen kann, da ja bereits die Eingangsdaten in die Zwischenstufe unter Verwendung des Schlüssels K_{A} in Fig. 1 verschlüsselt worden sind. Nachdem die Anfangsstufe 10 auf gesicherte Art und Weise berechnet wird, wird es einem Angreifer nicht gelingen, den geheimen Schlüssel K_{A} der Anfangsstufe herauszufinden.

Bei dem in Fig. 1 gezeigten bevorzugten Ausführungsbeispiel der vorliegenden Erfindung müssen somit keine Sicherheitskompromisse eingegangen werden. Bei gleichem Sicherheitsniveau im Vergleich zu einem vollständig gesicherten Ausführungsbeispiel des Algorithmus wird jedoch zumindest eine Energieeinsparung und bei bestimmten Implementierungen auch eine Zeit- und eine Chipflächeneinsparung erreicht, wie später dargelegt wird.

Bei einem alternativen Ausführungsbeispiel, bei dem lediglich eine sogenannte Vorwärts-Attacke möglich ist, was prinzipiell von der Art des eingesetzten Kryptoalgorithmus abhängen wird, genügt es, lediglich die Anfangsstufe 10 abzusichern und die Zwischenstufe 11, die in diesem Fall auch die Endstufe sein könnte, ungesichert aber aufwandsarm auszuführen. In diesem Fall hätte ein kryptographischer Algorithmus zumindest zwei Stufen, nämlich die Anfangsstufe 10 und die nachgeschaltete Zwischenstufe 11, die gleichzeitig die Endstufe ist. In diesem Fall genügt es, lediglich die Anfangsstufe 10 abzusichern.

Bei einem alternativen Ausführungsbeispiel der vorliegenden Erfindung sind lediglich Rückwärtsattacken möglich. In diesem Fall ist es notwendig, die Endstufe 12 abzusichern, jedoch nicht die Zwischenstufe 11, die in diesem Fall gleichzeitig die Anfangsstufe sein könnte. Hätte ein solcher Algorithmus drei Stufen, so würde eine eigene Anfangsstufe vorhanden sein, die aufgrund der lediglich vom Ausgang zum Eingang wirkenden kryptographischen Attacken ebenfalls nicht abgesichert werden müsste.

Die erfindungsgemäße Vorrichtung stellt somit durch Absichern entweder der ersten Stufe 10 oder der letzten Stufe 12 oder der ersten Stufe 10 und der letzten Stufe 12 gesichert, dass zumindest DPA-Attacken scheitern werden, während gleichzeitig durch ungesicherte Berechnung der Zwischenstufen, die aufgrund der mangelnden Hypothese nicht angreifbar sind, Einsparungen an Chipfläche, Energie oder Zeit erreicht werden.

Ist die in Fig. 1 gezeigte Prozessoreinrichtung derart implementiert, dass sie ein eigenes Rechenwerk für die Anfangsstufe 10, ein eigenes Rechenwerk für die Zwischenstufe 11 und ein eigenes Rechenwerk für die Zwischenstufe 12 aufweist, so werden bei dem bevorzugten Ausführungsbeispiel, bei dem die Anfangsstufe und die Endstufe abgesichert werden, dieselben zumindest in Dual-Rail und noch besser in Dual-Rail mit Pre-charge ausgeführt sein, während das Rechenwerk, das die Zwischenstufe 11 des Algorithmus implementiert, in einfacher Single-Rail-Technik ohne Precharge implementiert ist. Dies führt im Hinblick auf die Zwischenstufe 11 zu einer Chipflächen-Halbierung für das Rechenwerk für die Zwischenstufe 11 im Vergleich zu einer Dual-Rail-Implementierung. Ferner wird im Vergleich zu einer vollständigen Implementierung mit Dual-Rail und Precharge eine Energieeinsparung von circa 75% erreicht. Darüber hinaus ist eine schnellere Taktung möglich oder angepasst an die Taktraten der Ausgangsstufe und der Eingangsstufe eine langsamere Taktung, die ebenfalls mit verringertem Energieverbrauch und einfacheren Taktgeneratorschaltungen einhergeht.

Bei einem alternativen Ausführungsbeispiel der vorliegenden Erfindung, das in Fig. 2 dargestellt ist, wird die iterative Struktur eines Algorithmus dahingehend ausgenutzt, dass ein einziges Rechenwerk vorgesehen ist, um beispielsweise sämtliche an sich identischen Rundenfunktionen f (Block 33 in Fig. 3a) beispielsweise des DES-Algorithmus zu berechnen. Ein solches Rechenwerk ist in Fig. 2 bei 20 schematisch dargestellt. Da das Rechenwerk sowohl die Anfangsstufe 10 als auch die Endstufe 12 von Fig. 1 gesichert berechnen soll, ist das Rechenwerk für die kryptographische Funktion in Dual-Rail-Technik ausgeführt. Es enthält somit einen Nutzeingang 21a, der eine bestimmte Breite von n Bits hat, und einen komplementären Eingang 21b, der die gleiche Bitbreite n hat. Das Rechenwerk 20 umfasst einen Nutzausgang 22a und einen komplementären Ausgang 22b, die eine Bitbreite von m haben, wobei beim DES-Algorithmus m gleich n sein kann, obgleich dies für die vorliegende Erfindung nicht wesentlich ist.

Die in Fig. 2 gezeigte Prozessoreinrichtung umfasst ferner eine Vorbereitungseinrichtung 23, die ein Precharge oder Pre-Discharge durch Aufladen bzw. Entladen der Eingänge 21a, 21b und/oder der Ausgänge 22a, 22b des Rechenwerks 20 auf denselben Spannungspegel durchführt, wie es bereits anhand der in Fig. 6 gezeigten Tabelle erläutert worden ist. Die in Fig. 2 gezeigte Prozessoreinrichtung umfasst ferner eine steuerbare Taktzuführung 24, die ebenso wie die Vorbereitungseinrichtung 23 von einer Steuereinrichtung 25 steuerbar ist. Die in Fig. 2 gezeigte Prozessoreinrichtung umfasst ferner, um für den DES-Algorithmus geeignet zu sein, einen Dateneingangs/Ausgangs-Multiplexer, der in Fig. 2 nicht gezeigt ist, sowie einen Schlüsselgenerator zum Ableiten der Rundenschlüssel Kᵢ bzw., wenn diese Funktion extern ausgeführt ist, zumindest eine Schlüsselzuführung, die in Fig. 2 ebenfalls nicht dargestellt ist. Der Dateneingangs-/Ausgangs-Multiplexer und die Schlüsselzuführung stellen sicher, dass das Rechenwerk 20 in jeder Runde des DES-Algorithmus, der in Fig. 3a gezeigt ist, mit den korrekten Daten gespeist wird und dass die Ausgangsdaten des Rechenwerks an den Ausgängen 22a und 22b richtig weiterverarbeitet bzw. der XOR-Verknüpfung etc. unterzogen werden, falls die entsprechende XOR-Verknüpfung 34 extern von dem Rechenwerk 20 für die kryptographische Funktion angeordnet ist.

Die Steuereinrichtung 25 ist wirksam, um dann, wenn die Prozessoreinrichtung 13 die Anfangsstufe 10 von Fig. 1 des kryptographischen Algorithmus durchführt, die Vorbereitungseinrichtung 23 und die steuerbare Taktzuführung 24 dahingehend zu steuern, dass ein Precharge/Pre-Discharge-Betrieb stattfindet, dahingehend, dass die Eingänge und/oder Ausgänge des Rechenwerks 20 entsprechend vorbereitet werden (durch Aufladung oder Entladung auf einen gleichen Wert), und dass gleichzeitig die steuerbare Taktzuführung 24 auf einen Nutztakt einem Precharge-Takt oder Pre-Discharge-Takt (P-Takt) durchführt, damit das Rechenwerk 20 für kryptographische Funktionen, das ohnehin in Dual-Rail-Technik ausgeführt ist, ein optimal sicheres Leistungsprofil liefert.

Ist die Anfangsstufe des Algorithmus fertig berechnet, so weiß dies die Steuereinrichtung 25, wenn sie den Ablauf des gesamten Algorithmus steuert, oder wird dies der Steuereinrichtung 25 durch eine zentrale Steuerung mitgeteilt. In diesem Fall wird das Rechenwerk 20 von seinem gesicherten Berechnungsmodus in den ungesicherten Berechnungsmodus geschaltet, indem die Vorbereitungseinrichtung 23 deaktiviert wird (AUS), und indem die steuerbare Taktzuführung 24 angesprochen wird, um nunmehr keinen Precharge-Takt zu liefern. Das Rechenwerk 20 erhält im ungesicherten Modus von der steuerbaren Taktzuführung 24 lediglich Nutztakte.

Ist der Datendurchsatz der Prozessoreinrichtung im gesicherten Modus und im ungesicherten Modus gleich, so muss die steuerbare Taktzuführung 24 im ungesicherten Berechnungsmodus lediglich noch halb so viele Taktimpulse liefern, was zumindest zu einer Halbierung des Energieverbrauchs im Vergleich zum sicheren Berechnungsmodus für die Anfangsstufe und die Endstufe führt.

Um die Eingriffe in das Dual-Rail-Rechenwerk 29 so gering als möglich zu halten, kann die Komplementär-Schiene des Rechenwerks 20 im ungesicherten Berechnungsmodus weiterhin "mitlaufen", obgleich dies nicht zwingend notwendig ist. Zur weiteren Energieverbrauchsreduktion kann bei einem alternativen Ausführungsbeispiel der vorliegenden Erfindung die Steuereinrichtung 25 ferner ausgebildet sein, um in dem Rechenwerk 20 die zweite Schiene, also die Komplementärschiene, zu deaktivieren, wie es durch einen gestrichelten Steuerpfeil in Fig. 2 dargestellt ist, so dass durch diese Komplementärschiene im ungesicherten Berechnungsmodus keine Leistung verbraucht wird, was zu einer weiteren erheblichen Energieverbrauchsreduktion führen wird.

Selbst wenn im ungesicherten Berechnungsmodus die Komplementärschiene mitläuft, jedoch aus Gründen der Energieeinsparung auf den Precharge/Pre-Discharge-Takt (Vorbereitungstakt) verzichtet wird, führt bereits die Halbierung der Anzahl der Taktflanken zu einer erheblichen Energieeinsparung, die aus folgenden Gründen für bestimmte Ausführungen noch weiter erhöht werden kann. Üblicherweise wird ein Arbeitstakt auf einem Chip unter Verwendung eines sogenannten Taktbaums erzeugt. Ein genauer Taktoszillator, der bei einer bestimmten Arbeitsfrequenz einen genauen Master-Takt liefert, sitzt an der Wurzel eines Taktbaums. Takte mit unterschiedlichen Taktraten können durch Teilung bzw. Vervielfachung von diesem Master-Takt abgeleitet werden. Nachdem auf einem Chip üblicherweise nur eine begrenzte Anzahl von Taktgeneratoren, im Extremfall nur ein einziger Taktgenerator, vorhanden ist, und der Takt bzw. die verschiedenen Takte an viele Stellen auf dem Chip verteilt werden müssen, sind im Taktbaum ferner mehrere Taktverstärker vorhanden, die ebenfalls einen beträchtlichen Energieverbrauch haben. Ist der Taktbaum derart ausgestaltet, dass die steuerbare Taktzuführung 24 einen Taktzugang für einen "sicheren" Takt hat, der einen Nutztaktimpuls und einen Vorbereitungstaktimpuls aufweist, und ist die steuerbare Taktzuführung 24 ferner ausgebildet, um parallel hierzu dem Rechenwerk einen "ungesicherten" Arbeitstakt zuzuführen, der bei der im Vergleich zum sicheren Takt halben Taktfrequenz liegt, so wird bereits eine Energieeinsparung erreicht, wenn im Falle des ungesicherten Modus von dem "sicheren" Takt auf den "ungesicherten" Takt umgeschaltet wird. Wird dagegen der "sichere" Takt unmittelbar bei seiner Erzeugung, also möglichst weit oben im Taktbaum, deaktiviert, so werden auch die im Taktbaum für den sicheren Takt vorhandenen Taktverstärker deaktiviert sein, so dass sie ebenfalls keinen Energieverbrauch mit sich bringen.

An dieser Stelle sei angemerkt, dass für mit dem Stromnetz verbundene Anwendungen der Energieverbrauch an sich oftmals kein wesentlicher Aspekt ist. Dies ist jedoch dann völlig anders, wenn die erfindungsgemäße Vorrichtung im Rahmen einer Kontaktlosanwendung eingesetzt werden soll, beispielsweise auf einer Chipkarte, die selbst keine eigene Leistungsversorgung hat. Wird die Chipkarte in die Nähe eines Terminals gebracht, so zieht sie ihre Leistung aus einem vom Terminal erzeugten HF-Feld. In diesem Fall kann dann, wenn die Chipkarte weniger Energieverbrauch hat, das Terminal mit einer geringeren Strahlungsleistung betrieben werden, also preisgünstig ausgestaltet werden. Für die Chipkarte bedeutet dies, dass die Antennen/Gleichrichter-Anordnung durch Extrahieren einer Energie aus dem HF-Feld kleiner dimensioniert und somit billiger ausgestaltet werden kann, was im Hinblick auf Chipkarten, die typischerweise sehr hohe Stückzahlen erreichen, zu einer Kosteneinsparung und damit Preisreduktion auf dem wettbewerbsintensiven Markt führen kann.

Zusammenfassend sind die Instruktionen für die Steuerungseinrichtung 25 in einem Kasten 26 aufgeführt. Im gesicherten Modus für die Anfangsstufe 10 und/oder die Endstufe 12 liefert die Steuereinrichtung 25 der Vorbereitungseinrichtung 23 ein AN-Signal und der steuerbaren Taktzuführung 24 ein Signal, das anzeigt, dass mit Precharge/Pre-Discharge-Takt gearbeitet werden soll. Im ungesicherten Berechnungsmodus liefert die Steuereinrichtung 25 der Vorbereitungseinrichtung ein AUS-Signal und signalisiert der steuerbaren Taktzuführung 24, ohne Precharge-Takt zu arbeiten.

Bei einem bevorzugten Ausführungsbeispiel der vorliegenden Erfindung ist das Rechenwerk 20 als Full-Custom-Dual-Rail-Precharge-DES-Core ausgebildet, wobei der DES-Core ferner die Vorbereitungseinrichtung 23 zum Precharge/Pre-Discharge umfasst. Die Steuereinrichtung 25 ist bei diesem bevorzugten Ausführungsbeispiel der vorliegenden Erfindung als finite Zustandsmaschine (FSM; FSM = Finite State-Machine) ausgeführt, die in den in Fig. 3a dargestellten Runden 3 bis 14 nicht nur die entsprechenden Kontrollsignale zur Ansteuerung des Datenpfades und des Controlteils des DES-Core erzeugt, sondern zusätzlich Signale zum Abschalten des Precharge-Vorgangs be-reitstellt, die dann im Clock-Verteilungsbaum zu einer Unterdrückung des Precharge-Vorgangs verwendet werden.

Bei dem bevorzugten Ausführungsbeispiel, in dem die Logikschaltung hardwaremäßig als finite Zustandsmaschine implementiert ist, wird es aufgrund der Feistel-Struktur des DES-Algorithmus bevorzugt, nicht nur die erste Runde (Anfangsstufe 1) im gesicherten Modus auszuführen, sondern auch die zweite rund (Anfangsstufe 2) im gesicherten Modus auszuführen, da in der ersten Stufe eigentlich nur die Hälfte der Eingangsdaten verschlüsselt wird, während dann, in der zweiten Stufe, auch die andere Hälfte der Eingangsdaten unter Verwendung eines kryptographischen Schlüssels K₂ verschlüsselt wird. Dasselbe gilt für die letzte Runde (Endstufe 2) und die vorletzte Runde (Endstufe 1), die bei dem bevorzugten Ausführungsbeispiel der vorliegenden Erfindung ebenfalls im sicheren Modus ausgeführt werden, um auch eine kryptographische Rückwärtsattacke abwehren zu können.

Abhängig von den tatsächlichen Gegebenheiten kann das erfindungsgemäße Konzept zum Berechnen von verschlüsselten Daten aus Klartextdaten oder zum Berechnen von Klartextdaten aus verschlüsselten Daten in Hardware oder in Software implementiert werden. Die Implementation kann auf einem digitalen Speichermedium, insbesondere einer Diskette oder CD mit elektronisch auslesbaren Steuersignalen erfolgen, die so mit einem programmierbaren Computersystem zusammenwirken können, dass das Verfahren zum Berechnen der entsprechenden Daten ausgeführt wird. Allgemein besteht die Erfindung somit auch in einem Computer-Programm-Produkt mit auf einem maschinenlesbaren Träger gespeichertem Programmcode zur Durchführung des erfindungsgemäßen Verfahrens, wenn das Computer-Programm-Produkt auf einem Rechner abläuft. In anderen Worten ausgedrückt ist die Erfindung somit ein Computer-Programm mit einem Programmcode zur Durchführung des Verfahrens, wenn das Computer-Programm auf einem Computer abläuft.

### Bezugszeichenliste

- 10: Anfangsstufe
- 11: Zwischenstufe
- 12: Endstufe
- 13: Prozessoreinrichtung
- 20: Rechenwerk
- 21a: Nutzeingang
- 21b: Komplementäreingang
- 22a: Nutzausgang
- 22b: komplementärer Ausgang
- 23: Vorbereitungseinrichtung
- 23: steuerbare Taktzuführung
- 25: Steuereinrichtung
- 26: Steueranweisungen
- 30: DES-Eingabe
- 31: Anfangspermutation
- 32: Blockhalbierung
- 33: kryptographische Funktion
- 34: XOR-Verknüpfung
- 35: XOR-Verknüpfung
- 36: XOR-Verknüpfung
- 37: Dateneinteilung
- 38: Endpermutation
- 39: DES-Ausgabe
- 40: Expansionsoperation
- 41: XOR-Verknüpfung
- 42: Datenanordnung
- 43: SBOX-Subsitution
- 44: Datenanordnung
- 45: Permutation
- 46: erster Algorithmus
- 47: nachgeschalteter zweiter Algorithmus
- 48: nachgeschalteter dritter Algorithmus
- 50: Dual-Rail-Schaltung
- 51: Taktgenerator
- 52: Vorbereitungseinrichtung
- 60: Precharge-Zustand
- 61: Nutzdatenzustand
- 62: Precharge-Zustand
- 63: Nutzdatenzustand

## Patentansprüche

1. Vorrichtung zum Berechnen von verschlüsselten Daten aus Klartextdaten oder zum Berechnen von Klartextdaten aus verschlüsselten Daten, unter Verwendung eines kryptographischen Algorithmus, der eine Anfangsstufe (10), zumindest eine nachgeschaltete Zwischenstufe (11) oder eine Endstufe (12) und zumindest eine vorgeschaltete Zwischenstufe (11) aufweist, wobei in die Anfangsstufe (10) die Klartextdaten bzw. die verschlüsselten Daten oder von den Klartextdaten bzw. von den verschlüsselten Daten abgeleitete Eingangsdaten einspeisbar sind, wobei aus der Endstufe End-Ausgangsdaten, aus denen die verschlüsselten Ausgangsdaten bzw. die Klartext-Ausgangsdaten ableitbar sind, oder die verschlüsselten Daten bzw. entschlüsselten Daten selbst ausgebbar sind, wobei in die zumindest eine Zwischenstufe Ausgabedaten der Anfangsstufe einspeisbar sind, bzw. wobei in die Endstufe Ausgangsdaten der der Endstufe vorgeschalteten Zwischenstufe einspeisbar sind, mit folgenden Merkmalen:
einer Prozessoreinrichtung (13) zum Durchführen der Anfangsstufe (10), der zumindest einen Zwischenstufe (11) bzw. der Endstufe (12) des kryptographischen Algorithmus, wobei die Prozessoreinrichtung ausgebildet ist, um die Anfangsstufe (10) und/oder die Endstufe (12) auf eine gegenüber einer kryptographischen Attacke gesicherte Weise durchzuführen, und um die zumindest eine Zwischenstufe (11) auf eine gegenüber einer kryptographischen Attacke ungesicherte Weise durchzuführen.

2. Vorrichtung nach Anspruch 1, bei der die Prozessoreinrichtung (13) ausgebildet ist, um bei einer Durchführung der Anfangsstufe (10) und/oder der Endstufe (12) auf die gesicherte Weise ein Strom-, ein Leistungs- und/oder ein Zeitprofil zu haben, das im Hinblick auf die zu verarbeitenden Daten weniger aussagefähig ist als ein Strom-, Leistungs- bzw. Zeitprofil, das sich bei einer Durchführung der zumindest einen Zwischenstufe (11) auf die ungesicherte Weise ergibt.

3. Vorrichtung nach Anspruch 1 oder 2, bei der die kryptographische Attacke aus der folgenden Gruppe ausgewählt ist: einfache Leistungsanalyse, einfache Stromanalyse, einfache Zeitanalyse, differentielle Leistungsanalyse, differentielle Stromanalyse oder differentielle Zeitanalyse.

4. Vorrichtung nach Anspruch 1, 2 oder 3, bei der die Prozessoreinrichtung (13) ausgebildet ist, um bei einer Durchführung einer Berechnung auf die gesicherte -Weise einen höheren Energieverbrauch, einen höheren Chipflächenverbrauch und/oder einen höheren Zeitverbrauch aufzuweisen, im Vergleich zu einer Durchführung einer Berechnung auf die ungesicherte Weise.

5. Vorrichtung nach einem der vorhergehenden Ansprüche, bei der die Prozessoreinrichtung (13) zum Durchführen der Anfangsstufe (10) und/oder der Endstufe (12) in Dual-Rail-Technik ausgebildet ist und zum Durchführen der zumindest einen Zwischenstufe in Single-Rail-Technik ausgebildet ist.

6. Vorrichtung nach einem der vorhergehenden Ansprüche,
bei der die Prozessoreinrichtung (13) zum Durchführen der Anfangsstufe und/oder der Endstufe unter Verwendung eines Vorbereitungstakts zwischen zwei Datentakten ausgebildet ist, wobei im Vorbereitungstakt eine Precharge- oder eine Pre-Discharge-Operation ausführbar ist, und
bei der die Prozessoreinrichtung (13) zum Durchführen der zumindest einen Zwischenstufe (11) ausgebildet ist, um keinen Vorbereitungstakt zwischen zwei Datentakten zu verwenden.

7. Vorrichtung nach einem der Ansprüche 1 bis 4,
bei der die Anfangsstufe (10), die Endstufe (13) und die zumindest eine Zwischenstufe (11) eine identische Rundenfunktion (33) aufweisen.

8. Vorrichtung nach Anspruch 7, bei der gemäß dem kryptographischen Algorithmus für jede Runde ein geheimer Rundenschlüssel vorgesehen ist.

9. Vorrichtung nach Anspruch 7 oder 8,
bei der die Prozessoreinrichtung (13) ein Rechenwerk (20) zum Durchführen der Rundenfunktion, eine steuerbare Taktzuführung (24) zum Liefern eines Takts für das Rechenwerk (20), eine Vorbereitungseinrichtung (23) und eine Steuereinrichtung (25) zum Steuern der Vorbereitungseinrichtung (23) und der steuerbaren Taktzuführung (24) aufweist,
wobei das Rechenwerk (20) in Dual-Rail-Technik ausgebildet ist,
wobei die Steuereinrichtung (25) ausgebildet ist, um dann, wenn das Rechenwerk (20) die Anfangsstufe (10) und/oder die Endstufe (12) des kryptographischen Algorithmus ausführt, das Rechenwerk in der gesicherten Weise zu betreiben, wobei die Taktzuführung (24) so gesteuert wird, dass dieselbe einen Vorbereitungstakt vor einem Nutztakt liefert, und dass die Vorbereitungseinrichtung (23) im Vorbereitungstakt einen Pre-charge-Zustand oder einen Pre-Discharge-Zustand des Rechenwerks (20) bewirkt, und
um dann, wenn das Rechenwerk (20) die zumindest eine Zwischenstufe (11) durchführt, das Rechenwerk in der ungesicherten Weise zu betreiben, wobei die Taktzuführung (24) so gesteuert wird, dass dieselbe keinen Vorbereitungstakt liefert, so dass kein Precharge-Zustand oder Pre-Discharge-Zustand des Rechenwerks (20) bewirkt wird.

10. Vorrichtung nach Anspruch 9, bei der die steuerbare Taktzuführung einen Taktgenerator und zumindest einen Taktverstärker aufweist, wobei dann, wenn das Rechenwerk die zumindest eine Zwischenstufe (11) durchführt, die Steuereinrichtung (25) wirksam ist, um den zumindest einen Taktverstärker zu deaktivieren.

11. Vorrichtung nach einem der Ansprüche 7 bis 10, bei der der kryptographische Algorithmus ausgebildet ist, um in einer ersten Runde nicht durch die Rundenfunktion verarbeitete Eingangsdaten der Rundenfunktion zuzuführen, und um in einer zweiten Runde nicht durch die Rundenfunktion verarbeitete weitere Eingangsdaten der Rundenfunktion zuzuführen, und
bei der die Steuereinrichtung (25) ausgebildet ist, um das Rechenwerk für die erste Runde und die zweite Runde in der gesicherten Weise zu betreiben.

12. Vorrichtung nach einem der Ansprüche 7 bis 11, bei der der kryptographische Algorithmus ausgebildet ist, um aus einer vorletzten Runde Ausgangsdaten zu erzeugen, die keiner weiteren Rundenfunktion mehr unterworfen werden, und um aus einer letzten Runde weitere Ausgangsdaten zu erzeugen, die keiner weiteren Rundenfunktion mehr unterzogen werden,
wobei die Steuerungseinrichtung (25) ausgebildet ist, um das Rechenwerk für die vorletzte und die letzte Runde in der gesicherten Weise zu betreiben.

13. Vorrichtung nach einem der Ansprüche 1 bis 12,
bei der der kryptographische Algorithmus eine Initialisierungsstufe (31) vor der Anfangsstufe aufweist, um aus den Klartext-Daten die Anfangs-Eingangsdaten zu erzeugen, und bei der die Prozessoreinrichtung (13) ausgebildet ist, um die Initialisierungsstufe in der ungesicherten Weise durchzuführen.

14. Vorrichtung nach einem der Ansprüche 1 bis 13,
bei der der kryptographische Algorithmus eine Abschlußstufe (38) nach der Endstufe aufweist, wobei die Prozessoreinrichtung (13) ausgebildet ist, um die Abschlußstufe, in der kein kryptographischer Schlüssel verwendet wird, auf eine ungesicherte Art und Weise durchzuführen.

15. Vorrichtung nach einem der Ansprüche 1 bis 14,
bei der der kryptographische Algorithmus der DES-Algorithmus mit 16 Runden ist, und
bei der die Prozessoreinrichtung (13) ausgebildet ist, um die erste und die zweite Runde und/oder die 15. und die 16. Runde in der gesicherten Weise auszuführen, wobei zumindest eine der Runden 3 bis 14 in der ungesicherten Weise ausführbar ist.

16. Vorrichtung nach einem der vorhergehenden Ansprüche, bei der die Prozessoreinrichtung (13) ausgebildet ist, um bei einer Durchführung der Zwischenstufe in der ungesicherten Weise eine höhere Taktrate zu verwenden als bei einer Berechnung in der gesicherten Weise.

17. Verfahren zum Berechnen von verschlüsselten Daten aus Klartextdaten oder zum Berechnen von Klartextdaten aus verschlüsselten Daten, unter Verwendung eines kryptographischen Algorithmus, der eine Anfangsstufe (10), zumindest eine nachgeschaltete Zwischenstufe (11) oder eine Endstufe (12) und zumindest eine vorgeschaltete Zwischenstufe (11) aufweist,
wobei in die Anfangsstufe (10) die Klartextdaten bzw. die verschlüsselten Daten oder von den Klartextdaten bzw. von den verschlüsselten Daten abgeleitete Eingangsdaten einspeisbar sind, wobei aus der Endstufe End-Ausgangsdaten, aus denen die verschlüsselten Ausgangsdaten bzw. die Klartext-Ausgangsdaten ableitbar sind, oder die verschlüsselten Daten bzw. entschlüsselten Daten selbst ausgebbar sind, wobei in die zumindest eine Zwischenstufe Ausgabedaten der Anfangsstufe einspeisbar sind, bzw. wobei in die Endstufe Ausgangsdaten der der Endstufe vorgeschalteten Zwischenstufe einspeisbar sind, mit folgenden Schritten:
Durchführen (13) der Anfangsstufe (10) und/oder der Endstufe (12) auf eine gegenüber einer kryptographischen Attacke gesicherte Weise, und durchführen der zumindest einen Zwischenstufe (11) auf eine gegenüber einer kryptographischen Attacke ungesicherten Weise.

18. Computer-Programm mit einem Programmcode zur Durchführung des Verfahrens zum Berechnen von verschlüsselten Daten aus Klartextdaten oder von Klartextdaten aus verschlüsselten Daten nach Anspruch 17, wenn das Computer-Programm auf einem Computer abläuft.

## Claims

1. A device for calculating encrypted data from plaintext data or for calculating plaintext data from encrypted data using a cryptographic algorithm comprising an initial stage (10), at least one downstream intermediate stage (11) or a final stage (12) and at least one upstream intermediate stage (11), wherein the plaintext data or the encrypted data or the input data derived from the plaintext data or the encrypted data may be fed to the initial stage (10),
wherein final output data from which the encrypted output data or the plaintext output data may be derived or the encrypted data or decrypted data may be output from the final stage, wherein output data of the initial stage may be fed to the at least one intermediate stage, or wherein output data of the intermediate stage upstream of the final stage may be fed to the final stage, comprising:
processor means (13) for performing the initial stage (10), the at least one intermediate stage (11) and/or the final stage (12) of the cryptographic algorithm, wherein the processor means is formed to perform the initial stage (10) and/or the final stage (12) in a manner protected against a cryptographic attack and to perform the at least one intermediate stage (11) in a manner unprotected against a cryptographic attack.

2. The device according to claim 1, wherein the processor means (13) is formed to comprise, when performing the initial stage (10) and/or the final stage (12) in the protected manner, a current, power and/or time profile which, regarding the data to be processed, is less expressive than a current, power and/or time profile resulting when performing the at least one intermediate stage (11) in the unprotected manner.

3. The device according to claim 1 or 2, wherein the cryptographic attack is selected from the group of: simple power analysis, simple current analysis, simple time analysis, differential power analysis, differential current analysis or differential time analysis.

4. The device according to claim 1, 2 or 3, wherein the processor means (13) is formed to comprise, when performing a calculation in the protected manner, a higher energy consumption, a higher chip area consumption and/or a higher time consumption compared to performing a calculation in the unprotected manner.

5. The device according to one of the preceding claims, wherein the processor means (13) is formed in dual-rail technology for performing the initial stage (10) and/or the final stage (12) and is formed in single-rail technology for performing the at least one intermediate stage.

6. The device according to one of the preceding claims,
wherein the processor means (13) for performing the initial stage and/or the final stage is formed using a preparing clock between two data clocks, wherein a pre-charge or a pre-discharge operation may be executed in the preparing clock, and
wherein the processor means (13) for performing the at least one intermediate stage (11) is formed not to use a preparing clock between two data clocks.

7. The device according to one of claims 1 to 4,
wherein the initial stage (10), the final stage (13) and the at least one intermediate stage (11) have identical round functions (33).

8. The device according to claim 7, wherein a secret round key is provided for each round according to the cryptographic algorithm.

9. The device according to claim 7 or 8,
wherein the processor means (13) comprises a calculating unit (20) for performing the round function, a controllable clock feed (24) for providing a clock for the calculating unit (20), preparing means (23) and control means (25) for controlling the preparing means (23) and the controllable clock feed (24),
wherein the calculating unit (20) is formed in dual-rail technology,
wherein the control means (25) is formed to operate, when the calculating unit (20) executes the initial stage (10) and/or the final stage (12) of the cryptographic algorithm, the calculating unit in the protected manner, wherein the clock feed (24) is controlled such that it provides a preparing clock before a useful clock and such that the preparing means (23) causes a pre-charge state or a pre-charge state of the calculating unit (20) in the preparing clock, and
to operate, when the calculating unit (20) executes the at least one intermediate stage (11), the calculating unit in the unprotected manner, wherein the clock feed (24) is controlled such that it does not provide a preparing clock so that no pre-charge state or pre-discharge state of the calculating unit (20) is caused.

10. The device according to claim 9, wherein the controllable clock feed comprises a clock generator and at least one clock amplifier, wherein the control means (25) is, when the operating unit performs the at least one intermediate stage (11), operative to deactivate the at least one clock amplifier.

11. The device according to one of claims 7 to 10, wherein the cryptographic algorithm is formed to feed input data not processed by the round function to the round function in a first round and to feed further input data not processed by the round function to the round function in a second round, and
wherein the control means (25) is formed to operate the calculating unit for the first round and the second round in the protected manner.

12. The device according to one of claims 7 to 11, wherein the cryptographic algorithm is formed to generate, from a one but last round, output data not subjected to another round function and to generate, from a last round, further output data not subjected to another round function,
wherein the control means (25) is formed to operate the calculating unit for the one but last and the last round in the protected manner.

13. The device according to one of claims 1 to 12,
wherein the cryptographic algorithm comprises an initializing stage (31) before the initial stage to generate the initial input data from the plaintext data, and wherein the processor means (13) is formed to perform the initializing stage in the unprotected manner.

14. The device according to one of claims 1 to 13,
wherein the cryptographic algorithm comprises a terminal stage (38) after the final stage, wherein the processor means (13) is formed to perform the terminal stage where no cryptographic key is used in an unprotected manner.

15. The device according to one of claims 1 to 14,
wherein the cryptographic algorithm is the DES algorithm having 16 rounds, and
wherein the processor means (13) is formed to execute the first and the second round and/or the 15^{th} and the 16^{th} round in the protected manner, wherein at least one of rounds 3 to 14 may be executed in the unprotected manner.

16. The device according to one of the preceding claims, wherein the processor means (13) is formed to use a higher clock rate when performing the intermediate stage in the unprotected manner than when calculating in the protected manner.

17. A method for calculating encrypted data from plaintext data or for calculating plaintext data from encrypted data using a cryptographic algorithm comprising an initial stage (10), at least one downstream intermediate stage (11) or a final stage (12) and at least one upstream intermediate stage (11), wherein the plaintext data or encrypted data or input data derived from the plaintext data or the encrypted data may be fed to the initial stage (10), wherein final output data from which the encrypted output data or the plaintext output data may be derived or the encrypted data or decrypted data may be output from the final stage,
wherein output data of the initial stage may be fed to the at least one intermediate stage, or wherein output data of the intermediate stage upstream of the final stage may be fed to the final stage, comprising the steps of:
performing (13) the initial stage (10) and/or the final stage (12) in a manner protected against a cryptographic attack, and performing the at least one intermediate stage (11) in a manner unprotected against a cryptographic attack.

18. A computer program having a program code for performing the method for calculating encrypted data from plaintext data or plaintext data from encrypted data according to claim 17, when the computer program runs on a computer.

## Revendications

1. Dispositif de calcul de données cryptées à partir de données non cryptées ou de calcul de données non cryptées à partir de données cryptées, à l'aide d'un algorithme cryptographique qui présente une étape initiale (10), au moins une étape intermédiaire (11) connectée en aval ou une étape finale (12) et au moins une étape intermédiaire (11) connectée en amont, dans l'étape initiale (10) pouvant être alimentées les données non cryptées ou les données cryptées ou des données d'entrée dérivées des données non cryptées ou des données cryptées, de l'étape finale pouvant être sorties des données de sortie finales à partir desquelles peuvent être dérivées les données de sortie cryptées ou les données de sortie non cryptées, ou les données cryptées ou les données décryptées elles-mêmes, dans l'au moins une étape intermédiaire pouvant être alimentées des données de sortie de l'étape initiale, ou dans l'étape finale pouvant être alimentées des données de sortie de l'étape intermédiaire connectée en amont de l'étape finale, aux caractéristiques suivantes :
un dispositif processeur (13) destiné à effectuer l'étape initiale (10), l'au moins une étape intermédiaire (11) ou l'étape finale (12) de l'algorithme cryptographique, le dispositif processeur étant réalisé de manière à effectuer l'étape initiale (10) et/ou l'étape finale (12) en un mode sécurisé contre une attaque cryptographique, et à effectuer l'au moins une étape intermédiaire (11) en un mode non sécurisé contre une attaque cryptographique.

2. Dispositif selon la revendication 1, dans lequel le dispositif processeur (13) est réalisé de manière à avoir, lors d'une réalisation de l'étape initiale (10) et/ou de l'étape finale (12), en mode sécurisé un profil de courant, un profil de performance et/ou un profil de temps qui, en ce qui concerne les données à traiter, sont moins expressifs qu'un profil de courant, un profil de performance et/ou un profil de temps qui est obtenu lors d'une réalisation en mode non sécurisé de l'au moins une étape intermédiaire (11).

3. Dispositif selon la revendication 1 ou 2, dans lequel l'attaque cryptographique est sélectionnée parmi le groupe suivant : analyse de performance simple, analyse de courant simple, analyse de temps simple, analyse de performance différentielle, analyse de courant différentielle ou analyse de temps différentielle.

4. Dispositif selon la revendication 1, 2 ou 3, dans lequel le dispositif processeur (13) est réalisé de manière à présenter, lors d'une réalisation d'un calcul en mode sécurisé, une plus grande consommation d'énergie, une plus grande occupation de surface de puce et/ou une plus grande consommation de temps, comparé à une réalisation d'un calcul en mode non sécurisé.

5. Dispositif selon l'une des revendications précédentes, dans lequel le dispositif processeur (13) est réalisé selon la technique à double rail pour réaliser l'étape initiale (10) et/ou l'étape finale (12) et selon la technique à simple rail pour réaliser l'au moins une étape intermédiaire.

6. Dispositif selon l'une des revendications précédentes,
dans lequel le dispositif processeur (13) est réalisé de manière à effectuer l'étape initiale et/ou l'étape finale à l'aide d'un cycle de préparation entre deux cycles de données, dans le cycle de préparation pouvant être effectuée une opération de précharge ou de prédécharge, et
dans lequel le dispositif processeur (13) est réalisé, pour effectuer l'au moins une étape intermédiaire (11), de manière à ne pas utiliser de cycle de préparation entre deux cycles de données.

7. Dispositif selon l'une des revendications 1 à 4,
dans lequel l'étape initiale (10), l'étape finale (13) et l'au moins une étape intermédiaire (11) présentent une fonction d'arrondi (33) identique.

8. Dispositif selon la revendication 7, dans lequel est prévue, selon l'algorithme cryptographique, pour chaque passage une clé de passage secrète.

9. Dispositif selon la revendication 7 ou 8,
dans lequel le dispositif processeur (13) présente une unité de calcul (20) destinée à effectuer la fonction de passage, un dispositif d'alimentation de cycle réglable (24) destiné à fournir un cycle d'horloge pour l'unité de calcul (20), un dispositif de préparation (23) et un dispositif de commande (25) destiné à commander le dispositif de préparation (23) et le dispositif d'alimentation de cycle réglable (24),
l'unité de calcul (20) étant réalisée selon la technique à double rail,
le dispositif de commande (25) étant réalisé de manière à faire fonctionner l'unité de calcul en mode sécurisé lorsque l'unité de calcul (20) effectue l'étape initiale (10) et/ou l'étape finale (12) de l'algorithme cryptographique, le dispositif d'alimentation de cycle (24) étant commandé de sorte qu'il fournisse un cycle de préparation avant un cycle utile, et que le dispositif de préparation (23) provoque, dans le cycle de préparation, un état de précharge ou un état de prédécharge de l'unité de calcul (20), et
à faire fonctionner l'unité de calcul en mode non sécurisé lorsque l'unité de calcul (20) effectue l'au moins une étape intermédiaire (11), le dispositif d'alimentation de cycle (24) étant commandé de sorte qu'il ne fournisse pas de cycle de préparation, de sorte qu'il ne soit pas provoqué d'état de précharge ou d'état de prédécharge de l'unité de calcul (20).

10. Dispositif selon la revendication 9, dans lequel le dispositif d'alimentation de cycle réglable présente un générateur de cycle d'horloge et au moins un amplificateur de cycle d'horloge, le dispositif de commande (25) étant actif lorsque l'unité de calcul effectue l'au moins une étape intermédiaire (11), pour désactiver l'au moins un amplificateur de cycle d'horloge.

11. Dispositif selon l'une des revendications 7 à 10, dans lequel l'algorithme cryptographique est réalisé de manière à alimenter, dans un premier passage, des données d'entrée de la fonction de passage non traitées par la fonction de passage et à alimenter, dans un deuxième passage, d'autres données d'entrée de la fonction de passage non traitées par la fonction de passage, et
dans lequel le dispositif de commande (25) est réalisé de manière à faire fonctionner l'unité de calcul pour le premier passage et pour le deuxième passage en mode sécurisé.

12. Dispositif selon l'une des revendications 7 à 11, dans lequel l'algorithme cryptographique est réalisé de manière à générer, à partir d'un pénultième passage, des données de sortie qui ne sont plus soumises à une autre fonction de passage et à générer, à partir d'un dernier passage, d'autres données de sortie qui ne sont plus soumises à une autre fonction de passage,
le dispositif de commande (25) étant réalisé de manière à faire fonctionner l'unité de calcul en mode sécurisé pour le pénultième et le dernier passage.

13. Dispositif selon l'une des revendications 1 à 12,
dans lequel l'algorithme cryptographique présente une étape d'initialisation (31) avant l'étape initiale, pour générer, à partir des données non cryptées, les données d'entrée initiales, et
dans lequel le dispositif processeur (13) est réalisé de manière à effectuer l'étape d'initialisation en mode non sécurisé.

14. Dispositif selon l'une des revendications 1 à 13,
dans lequel l'algorithme cryptographique présente une étape terminale (38) après l'étape finale, le dispositif processeur (13) étant réalisé de manière à effectuer l'étape terminale, dans laquelle il n'est pas utilisé de clé cryptographique, en un mode non sécurisé.

15. Dispositif selon l'une des revendications 1 à 14,
dans lequel l'algorithme cryptographique de l'algorithme DES est à 16 passages, et
dans lequel le dispositif processeur (13) est réalisé de manière à effectuer le premier et le deuxième passage et/ou le 15^{ème} et le 16^{ème} passage en mode sécurisé, au moins l'un des passages 3 à 14 pouvant être effectué en mode non sécurisé.

16. Dispositif selon l'une des revendications précédentes, dans lequel le dispositif processeur (13) est réalisé de manière à utiliser, lors de la réalisation de l'étape intermédiaire en mode non sécurisé, une fréquence d'horloge supérieure à celle lors d'un calcul en mode sécurisé.

17. Procédé pour calculer des données cryptées à partir de données non cryptées ou pour calculer des données non cryptées à partir de données cryptées, à l'aide d'un algorithme cryptographique qui présente une étape initiale (10), au moins une étape intermédiaire (11) connectée en aval ou une étape finale (12) et au moins une étape intermédiaire (11) connectée en amont, dans l'étape initiale (10) pouvant être alimentées les données non cryptées ou les données cryptées ou des données d'entrée dérivées des données non cryptées ou des données cryptées, de l'étape finale pouvant être sorties des données de sortie finales à partir desquelles peuvent être dérivées les données de sortie cryptées ou les données de sortie non cryptées, ou les données cryptées ou les données décryptées elles-mêmes, dans l'au moins une étape intermédiaire pouvant être alimentées des données de sortie de l'étape initiale, ou dans l'étape finale pouvant être alimentées des données de sortie de l'étape intermédiaire connectée en amont de l'étape finale, aux étapes suivantes consistant à :
effectuer (13) l'étape initiale (10) et/ou l'étape finale (12) en un mode sécurisé contre une attaque cryptographique, et effectuer l'au moins une étape intermédiaire (11) en un mode non sécurisé contre une attaque cryptographique.

18. Programme d'ordinateur avec un code de programme pour exécuter le procédé de calcul de données cryptées à partir de données non cryptées ou de données non cryptées à partir de données cryptées selon la revendication 17 lorsque le programme d'ordinateur se déroule sur un ordinateur.
